(19) Europäisches Patentamt
European Patent Office
Office européen des brevets

(11) **EP 4 371 253 B1**

(12) **EUROPEAN PATENT SPECIFICATION**

(45) Date of publication and mention
of the grant of the patent:
**22.07.2026 Bulletin 2026/30**

(21) Application number: **22944031.8**

(22) Date of filing: **29.09.2022**

(51) International Patent Classification (IPC):
**H04L 5/00** $^{(2006.01)}$

(52) Cooperative Patent Classification (CPC):
**H04J 13/004; H04J 11/00; H04L 5/0051;**
**H04L 5/0016**

(86) International application number:
**PCT/CN2022/122955**

(87) International publication number:
**WO 2024/065562 (04.04.2024 Gazette 2024/14)**

(54) **DEMODULATION REFERENCE SIGNAL PORT MAPPING AND INDICATION SCHEMES**

DEMODULATIONSREFERENZSIGNALPORTABBILDUNG UND ANZEIGESCHEMATA

SCHÉMAS DE MAPPAGE ET D'INDICATION DE PORT DE SIGNAL DE RÉFÉRENCE DE DÉMODULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.05.2024 Bulletin 2024/21**

(73) Proprietor: **ZTE Corporation**
**Shenzhen, Guangdong 518057 (CN)**

(72) Inventors:
 • **MEI, Meng**
  **Shenzhen, Guangdong 518057 (CN)**
 • **GAO, Bo**
  **Shenzhen, Guangdong 518057 (CN)**
 • **ZHANG, Yang**
  **Shenzhen, Guangdong 518057 (CN)**
 • **YAO, Ke**
  **Shenzhen, Guangdong 518057 (CN)**

(74) Representative: **Vossius & Partner**
**Patentanwälte Rechtsanwälte mbB**
**Siebertstrasse 3**
**81675 München (DE)**

(56) References cited:
 WO-A1-2022/078709  CN-A- 107 733 480
 CN-A- 114 651 400  US-A1- 2020 145 266
 US-B2- 11 038 729  US-B2- 11 310 019

 • HUAWEI: "Discussion on NR PUSCH demodulation performance requirements", 3GPP DRAFT; R4-1809288 DISC ON NR PUSCH DEMOD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Montreal, Canada; 20180702 - 20180706, 1 July 2018 (2018-07-01), Mobile Competence Centre ; 650, route des Lucioles ; F-06921 Sophia-Antipolis Cedex ; France , XP051469168

## Description

### TECHNICAL FIELD

This disclosure is directed generally to wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices, as well as support an increasingly mobile society. US 11038729B2 discloses a device that identifies a sequence length corresponding to a number of resource blocks, and selects a modulation scheme based on the sequence length. The device selects, from a set of sequences associated with the modulation scheme, a sequence having the sequence length. US 11 310 019 B2 discloses a method for a terminal device for uplink DMRS transmission, including receiving first DMRS configuration information sent by a network device indicating a type of a DMRS sequence, receiving second DMRS configuration information sent by the network device indicating at least one of an antenna port configuration of DMRS, a physical resource configuration of DMRS, and a sequence configuration of DMRS, determining a configuration parameter indicated by the second DMRS configuration information according to the first DMRS configuration information, determining a transmission parameter of DMRS according to the configuration parameter indicated by the second DMRS configuration information, and transmitting DMRS to the network device according to the transmission parameter.

### SUMMARY

Various techniques are disclosed that can be implemented by embodiments in mobile communication technology, including 5th Generation (5G), new radio (NR), 4th Generation (4G), and long-term evolution (LTE) communication systems with respect to demodulation reference signal (DMRS) design.

The scope of the invention is defined and limited by the appended set of independent claims wherein a method according to claim 1, an inter-related method according to claim 5 and corresponding apparatus and computer-readable medium according to claims 9-10 are provided for the configuration of demodulation reference signals, DM-RS. Further embodiments are provided by the appended dependent claims.

The above and other aspects and their implementations are described in greater detail in the drawings, the descriptions, and the claims.

### BRIEF DESCRIPTION OF THE DRAWINGS

FIG. 1 illustrates DMRS type 2 with one front loaded DMRS symbols.

FIG. 2 illustrates DMRS type 2 with two front loaded DMRS symbols.

FIG. 3 illustrates DMRS type 2 with one front loaded and two additional DMRS symbols.

FIG. 4 illustrates DMRS CDM groups with 4 DMRS ports in one CDM group.

FIG. 5 illustrates DMRS CDM groups with 4 DMRS ports in one CDM group for DMRS type 1.

FIG. 6 is a flowchart illustrating an example method.

FIG. 7 is a flowchart illustrating an example method.

FIG. 8 is a block diagram example of a wireless communication system.

FIG. 9 is a flowchart of an example method of wireless communication.

## DETAILED DESCRIPTION

Section headings are used in the present document only to improve readability and do not limit scope of the disclosed embodiments and techniques in each section to only that section. Certain features are described using the example of Fifth Generation (5G) wireless protocol. However, applicability of the disclosed techniques is not limited to only 5G wireless systems.

In the initial releases of new radio (NR), two demodulation reference signal (DMRS) types are supported named as DMRS type 1 and DMRS type 2.

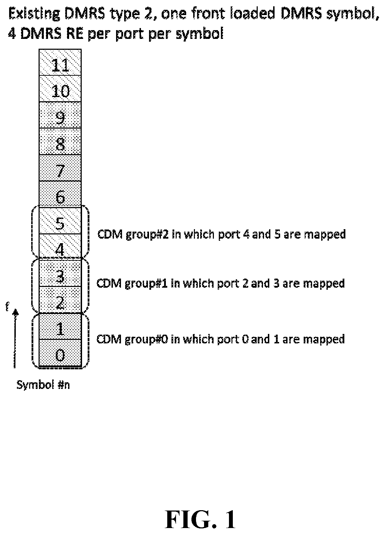

Figure 1 shows the DMRS pattern for DMRS type 2 within one physical resource block (PRB) in the case when one front loaded DMRS symbol is configured by radio resource control (RRC) signaling or indicated by downlink control information (DCI) signaling, where two adjacent frequency resource elements (REs) form one DMRS code division multiplexing (CDM) group.

Specifically, DMRS port 0 and 1 are multiplexed in CDM group #0, i.e., port 0 and port1 are multiplexed in RE #0 and RE #1 in CDM manner, and port 0 and port 1 are also multiplexed in RE #6 and RE #7 in CDM manner. As seen in Figure 1, CDM group #0 are repeated twice where one is in RE #0 and #1, and the other one is in RE #6 and #7. Similar mapping for other DMRS ports. In summary, 6 DMRS ports are supported in the case of one front loaded DMRS symbol, and the density of each DMRS port is 4 REs per PRB per symbol.

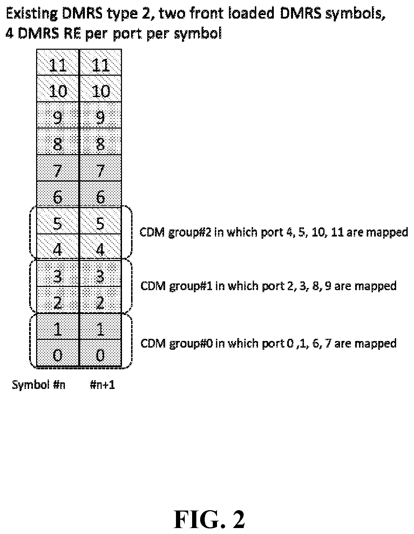

Figure 2 shows the DMRS pattern for DMRS type 2 within one PRB in the case when two front loaded DMRS symbols are configured by RRC signaling or indicated by DCI signaling, where four adjacent REs form one DMRS CDM group.

Specifically, DMRS port 0, 1, 6 and 7 are multiplexed in CDM group #0 in CDM manner. Similar mapping for other DMRS ports. In summary, 12 DMRS ports are supported in the case of two front loaded DMRS symbols, and the density of each DMRS port is 8 REs per PRB per 2-symbols. Note that in one PRB, each CDM group maps twice, e.g., CDM group #0 maps on RE #0, #1 and also RE #6, #7.

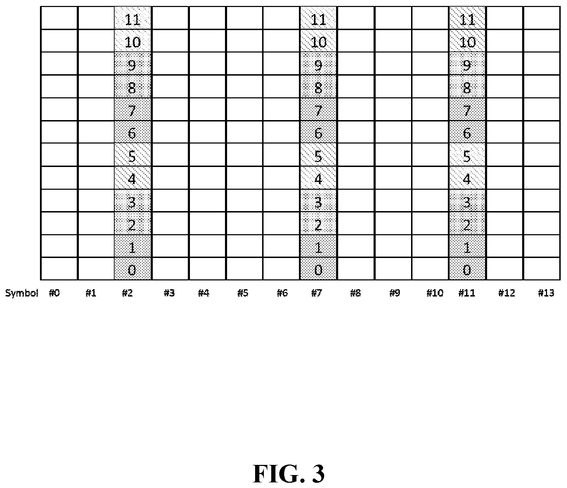

Figure 3 shows one front loaded DMRS symbol and X = 0, 1, 2 additional DMRS symbol can be configured.

In the uplink or downlink transmission, more than 8 or 12 DMRS ports may be supported. New DMRS pattern should be designed, and the DMRS port should also be indicated to UE. In current specification, only 8 or 12 DMRS ports are supported, and how to support more DMRS ports should be considered.

## Embodiment 1

User equipment (UE) receives a reference signal indication from gNB and acquire and demodulate the reference signal from plurality of resources.

One DMRS port can be associated with orthogonal cover code (OCC) of length 4 or 6 in the frequency domain, and up to 4 or 6 DMRS ports can be mapped on the same resources by using different OCC.

For DMRS mapping, the frequency domain OCC with length 4 can be used and 4 resource elements can be used for one CDM group mapping or one OCC with length 4 mapping.

The DMRS mapping is associated with plurality parameter, such as from at least one of: the PRB index for one scheduling or in one PRG, the repetition number of CDM group, the RE index, the DMRS port index, and the related OCC index.

The sequence shall be mapped to the intermediate quantity $a_{k,l}^{(p,\mu)}$ according to

$$a_{k,l}^{(p,\mu)} = w_f(k')w_t(l')r(4*n+k')$$

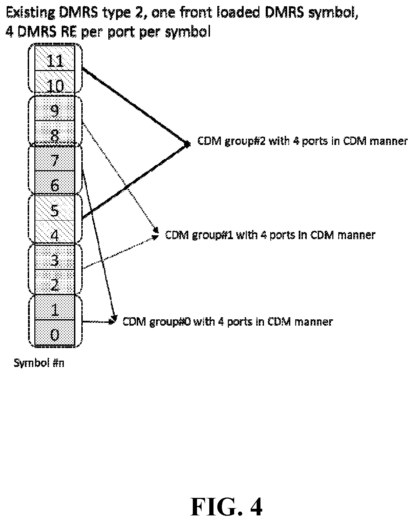

As shown in Figure 4 of DMRS type 2, 4 REs are supported for one CDM group for single symbol DMRS mapping, and one DMRS port with OCC of length 4 can be used.

For DMRS type 2, 3 CDM groups are used for DMRS mapping, and the DMRS ports of the first CDM group are mapped on REs #0, 1, 6, 7, and the related parameter for DMRS mapping which is represented by $k'$ and RE indexes are associated with the parameter $k'$, such that k'= 0,1,6,7 .

Considering DMRS type 2, up to 3 DMRS CDM groups are supported, and the 3 CDM groups are mapped on different resources, a parameter is associated with different CDM groups and determined by the start RE index of the mapping of each CDM group. Regardless of OCC in time domain, for DMRS type 2, the CDM group #0, 1, 3 are associated with 4 ports in CDM manner, as shown in Figure 4.

For DMRS type 2, the DMRS can be mapped on the frequency resource elements of :

$$k = a*n+b*k'+\Delta$$

The parameter $k'$, the associate resource elements in one CDM group, and the start resource elements index for each CDM group respectively are discussed above.

The parameter a represents the difference of REs between two times of DMRS mapping for the same CDM group or it can be described as the total number of REs that used for mapping the number of CDM groups or the total number of DMRS ports supported in one OFDM symbol and the parameter n represents different times of DMRS mapping for the same CDM group.

Take type 2 DMRS for example, each CDM group is mapped on 4 different REs, and for up to 3 CDM groups, a total number of 12 REs are used for the CDM groups. So, for the same CDM group mapping, different 12 REs are supported, the value a equals to 12, and n can be a integer value from 0. The formula can be modified as $k = 12*n + k'+\Delta$.

For the first time of DMRS CDM group mapping, i.e., n=0

For CDM group#0, k'= 0,1,6,7, and $\Delta$ = 0, CDM group 0 are mapped on REs #0,1,6,7.

For CDM group#1, $k'$ = 0,1,6,7, and $\Delta$ = 2, CDM group 1 are mapped on REs #2,3,8,9.

For CDM group#2, k'= 0,1,6,7, and $\Delta$ = 2, CDM group 2 are mapped on REs #4,5,10,11.

All of the REs in one PRB are used for the DMRS mapping for the up to 3 DMRS CDM groups.

Similarly, for the other value of n, the REs of other PRBs are used for the DMRS mapping.

**Embodiment 2**

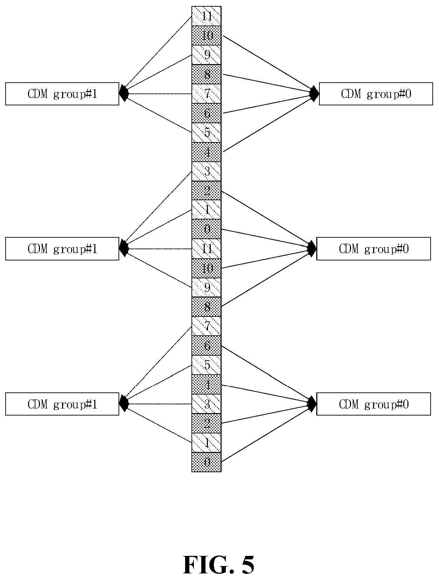

As shown in Figure 5 of DMRS type 1 DMRS, up to 2 CDM groups are supported, if the frequency domain orthogonal cover codes (FD-OCC) is supported as length 4. 4 from the total 6 REs are used for the DMRS ports mapping of one CDM group in one PRB and the other 2 REs are used for the DMRS mapping combined with 2 REs from the consecutive PRB for one CDM group mapping, or it can be called PRB bundling for the consecutive PRBs for all the scheduled PRBs or the PRBs in one PRG.

Similarly for type 1 DMRS mapping, regardless of the time domain OCC, some parameters should be determined for the frequency domain resource mapping.

For DMRS type 1, 2 CDM groups are used for DMRS mapping, and the DMRS ports of the first CDM group are mapped on REs #0,2,4,6, and the related parameter for DMRS mapping which is represented by $k'$ and the RE indexes are associated with the parameter $k'$, such that k'= 0,2,4,6

Considering for DMRS type 1, up to 2 DMRS CDM groups are supported, and the 2 CDM groups are mapped on different resources, a parameter of $\Delta$ is associated with different CDM groups and determined by the start RE index of the mapping of each CDM group. Regardless of OCC in the time domain, for DMRS type 2, the CDM group #0, 1 are associated with 4 ports in CDM manner, as shown in Figure 5.

For DMRS type 1, the DMRS can be mapped on the frequency resource elements of:

$$k = a*n + b*k' + \Delta$$

The parameter $k'$, the associate resource elements in one CDM group, and the start resource elements index for each CDM group respectively are discussed above.

The parameter a represents the difference of the REs between two times of DMRS mapping for the same CDM group or it can be described as the total number of REs that used for mapping the number of CDM groups or the total number of DMRS ports supported in one OFDM symbol and the parameter n represents different times of DMRS mapping for the same CDM group.

Take type 1 DMRS for example, each CDM group is mapped on 4 different REs, and for the up to 2 CDM groups, a total number of 8 REs are used for the CDM groups. So, for the same CDM group mapping, a difference of 8 REs are supported, the value a equals to 8, and n can be a integer value from 0. The formula can be modified to $k = 8 * n + k'+\Delta$.

For the first time of DMRS CDM group mapping, i.e., n=0

For CDM group#0, k'= 0,2,4,6, and $\Delta$ = 0, CDM group 0 are mapped on REs #0,2,4,6.

For CDM group#1, $k'$ = 0,2,4,6, and $\Delta$ = 1, CDM group 1 are mapped on REs #1,3,5,7.

For the second time of DMRS CDM group mapping, i.e., n=1

For CDM group#0, k'= 0,2,4,6, and $\Delta$ = 0, CDM group 0 are mapped on REs #8,10,12,14.

For CDM group#1, $k'$ = 0,2,4,6, and $\Delta$ = 1, CDM group 1 are mapped on REs #9,11,13,15.

For the third time of DMRS CDM group mapping, i.e., n=2

For CDM group#0, k'= 0,2,4,6, and $\Delta$ = 0, CDM group 0 are mapped on REs #16,18,20,22.

For CDM group#1, $k'$ = 0,2,4,6, and $\Delta$ = 1, CDM group 1 are mapped on REs #17,19,21,23.

As shown in Figure 5, REs #0-11 are allocated as the first PRB, and REs #12-23 are allocated as the second PRB, which are the REs #0-11 of the second PRB.

For DMRS type 1, two PRB can be bundled for the DMRS port mapping, and three times mapping are supported for each CDM group in the two PRBs.

In the case of an even number of PRBs are scheduled for a PDSCH/PUSCH transmission or in one PRG, a and n are associated with the total number of REs of these PRBs, e.g., $n = 0,1,...floor(numberofREs/a)-1$.

In the case of odd number of PRBs are scheduled for a PDSCH/PUSCH transmission or in one PRG, the last plurality REs of the last PRB may not be used for the DMRS mapping, so for the determination of a and n, these REs should not be considered, i.e., $n = 0,1,...floor(numberofREs/a) -1$. The numberofREs should be all of the REs except for the plurality REs of the last PRB.

In the case of odd number of PRBs are scheduled for a PDSCH/PUSCH transmission or in one PRG, the last plurality REs of the last PRB may not be used for the DMRS demodulation but can still be mapped from the transmission point. Thus, for the determination of a and n, these REs should also be considered, i.e., $n = 0,1,...,ceil(numberofREs/a) -1$. The numberofREs should be all the REs except for the plurality REs of the last PRB.

In the case of odd number of PRBs are scheduled for a PDSCH/PUSCH transmission or in one PRG, the last PRB may not be used for the DMRS mapping, so for the determination of a and n ,these REs in the last PRB should not be considered, i.e., $n = 0,1,...,numberofREs/ a$, in this case, the numberofREs should be determined by the scheduled PRB number for a PDSCH/PUSCH or a PRG except for the one PRB, e.g., the last PRB.

so the intermediate quantity $\tilde{a}_{k,l}^{(\tilde{p}_j,\mu)}$ of DMRS can be determined by

$$a_{k,l}^{(p,\mu)} = w_f(k')w_t(l')r(4*n+k')$$

$$k = \begin{cases} 8*n+k'+\Delta, configuration\ type\ I & k'=0,2,4,6; \\ 12*n+k'+\Delta, & configuration\ type\ II & k'=0,1,6,7; \end{cases}$$

$$l = \bar{l} + l'$$

$$n = 0,1...$$

$$j = 0,1,...,v-1$$

The parameters in the formula indicate the frequency domain and time domain resource. One DMRS RS port is mapped onto 2 REs of one PRB on one OFDM symbol as shown in Figure 4. It can be found one DMRS port is mapped on two REs onto one PRB with a frequency domain OCC. The parameters $w_f(k')$ and $w_f(l')$ are the OCC in the frequency domain and time domain. $r(2n + k')$ is the sequence of the DMRS port.

In the case of the DMRS is mapped within one PRB, and for DMRS type 1, if FD-OCC=6 is supported, the parameter k for DMRS configuration type 1 should be modified as:

$$k = 12*n+k'+\Delta \quad k'=0,2,4,6,8,10$$

**Embodiment 3**

Considering the parameter $k'$ also is associated with the sequence generation of $r(2n + k')$, and if a unified design is supported of $k'$ is supported for type 1 and type 2 DMRS, e.g., $k' = 0,1,2,3$, so for DMRS type 1, the formula of $k$ should be modified as $k = 8*n+2*k'+\Delta$ and for DMRS type 2, from the mapping pattern as shown in figure 4, k should be 0,1,6,7 in this PRB, and if $k' = 0,1,2,3$, parameter $k$ should be calculated from $k'$.

So the formula for type 2 DMRS should be $k=12*n+(k'+c)+\Delta$, in the case of $k'=0,1, c = 0$, in the case of $k'=2,3, c = 4$.

Therefore, the intermediate quantity $\tilde{a}_{k,l}^{(\tilde{p}_j,\mu)}$ of DMRS can be determined by

$$a_{k,l}^{(p,\mu)} = w_f(k')w_t(l')r(4*n+k')$$

$$k = \begin{cases} 8*n+2*k'+\Delta, configuration\ type\ I \\ 12*n+k'+c+\Delta, & configuration\ type\ II \end{cases}$$

$$k' = 0,1,2,3$$

$$c = \begin{cases} 0 & when\ k' = 0,1 \\ 4 & when\ k' = 2,3 \end{cases}$$

$$l = \bar{l} + l'$$

$$n = 0,1\ldots$$

$$j = 0,1,\ldots,\nu - 1$$

$k'$ and $\Delta$ are associated with the DMRS port index or CDM group index, as shown in table 1 and 2

Table 1: Parameters for PDSCH DM-RS configuration type 1.

| $p$ | CDM group $\lambda$ | $\Delta$ | $w_f(k')$ | | | |
|-----|------|----|--------|--------|--------|--------|
| | | | $k' = 0$ | $k' = 1$ | $k' = 2$ | $k' = 3$ |
| 0 | 0 | 0 | +1 | +1 | +1 | +1 |
| 1 | 0 | 0 | +1 | -1 | +1 | +1 |
| 2 | 0 | 0 | +1 | +1 | -1 | -1 |
| 3 | 0 | 0 | +1 | -1 | -1 | +1 |
| 4 | 1 | 1 | +1 | +1 | +1 | +1 |
| 5 | 1 | 1 | +1 | -1 | +1 | -1 |
| 6 | 1 | 1 | +1 | +1 | -1 | -1 |
| 7 | 1 | 1 | +1 | -1 | -1 | +1 |

Table 2: Parameters for PDSCH DM-RS configuration type 2.

| $p$ | CDM group $\lambda$ | $\Delta$ | $w_f(k')$ | | | |
|-----|------|----|--------|--------|--------|--------|
| | | | $k' = 0$ | $k' = 1$ | $k' = 2$ | $k' = 3$ |
| 0 | 0 | 0 | +1 | +1 | +1 | +1 |
| 1 | 0 | 0 | +1 | -1 | +1 | -1 |
| 2 | 0 | 0 | +1 | +1 | -1 | -1 |
| 3 | 0 | 0 | +1 | -1 | -1 | +1 |
| 4 | 1 | 2 | +1 | +1 | +1 | +1 |
| 5 | 1 | 2 | +1 | -1 | +1 | -1 |
| 6 | 1 | 2 | +1 | +1 | -1 | -1 |
| 7 | 1 | 2 | +1 | -1 | -1 | +1 |
| 8 | 2 | 4 | +1 | +1 | +1 | +1 |
| 9 | 2 | 4 | +1 | -1 | +1 | -1 |
| 10 | 2 | 4 | +1 | +1 | -1 | -1 |
| 11 | 2 | 4 | +1 | -1 | -1 | +1 |

## Embodiment 4

The indication includes the association of phase tracking reference signal (PTRS)-DMRS for more than one physical uplink shared channel (PUSCH) transmission groups.

Each group is indicated with at least one DMRS port.

The UE is configured with one or more sounding reference signal (SRS) resource sets, which are configured in srs-ResourceSetToAddModList or srs-ResourceSetToAddModListDCI-0-2 with higher layer parameter usage in SRS-ResourceSet set to 'codebook' or 'non-codebook'. Each group is associated with one SRS resource set. Each of PUSCH transmission group is associated with one SRS resource set and these PUSCH transmission group are associated with different beam states or spatial relations.

Each of these PUSCH transmissions groups at configured or indicated with different transmission layers (DMRS ports) and these PUSCH transmission group can be fully or partially overlapped in time domain and/or frequency domain.

For two groups of PUSCH transmission, in the case of two PTRS port is enabled, and the association of PTRS port and DMRS port should be indicated in the case of at least one PTRS port is shared by more than one DMRS port.

In the case of only one DMRS port is indicated or configured for each transmission group, and if PTRS is enabled, and the PTRS port is associated with the one DMRS port, and no indication is need.

If one DMRS port is indicated or configured for one PUSCH transmission group, and more than one DMRS ports are indicated for the other PUSCH transmission group, such as layer combinations {1+2, 2+1, 1+3, 3+1}, the association of PTRS port and DMRS port should be indicated for the PUSCH transmission group with more than one DMRS ports. If two DMRS ports are indicated for one PUSCH transmission group, 1bit can be used for the indication of PTRS port and DMRS port of this group, and table 4-1 or table 4-2 or table 4-3 can be used for the indication of PTRS port and DRMS port. If three DMRS ports in one transmission group share one PTRS port 2 bits should be used to indicate the association of PTRS port and DMRS port and table 3 should be used.

Table 3 indicates the PTRS port x associated with the xth SRS resource set, or table 5 when PTRS port 0 associated with different SRS resource set.

Table 3: PTRS-DMRS association for UL PTRS port x

| Value | DMRS port |
|-------|-----------|
| 0 | 1st scheduled DMRS port |
| 1 | 2nd scheduled DMRS port |
| 2 | 3rd scheduled DMRS port |
| 3 | 4th scheduled DMRS port |

For layer combinations {2+2}, each PTRS port is share by the two DMRS ports and one bit should be used to indicated with DMRS port is associated with the PTRS port. For example, 1st bit in PTRS-DMRS association indicates the DMRS port associated PTRS port 0 and 2nd bit in PTRS-DMRS association indicates the DMRS port associated with PTRS port 1 for each PUSCH transmission group.

Table 4 indicates PTRS port is configured across these PUSCH transmission groups, and a total number of 2 PTRS ports are configured as PTRS port 0 and 1.

Table 4: PTRS-DMRS association for UL PTRS ports 0 and 1

| Value of MSB | DMRS port | Value of LSB | DMRS port |
|--------------|-----------|--------------|-----------|
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

In the case of the two PTRS port 0 is configured or indicated and each PTRS port is associated with one SRS resource set. The indicated of PTRS port and DMRS port association can be shown in Table 5.

Table 5: PTRS-DMRS association for UL PTRS port 0 or for the actual UL PT-RS port

| Value of MSB | DMRS port | Value of LSB | DMRS port |
|--------------|-----------|--------------|-----------|
| 0 | 1st scheduled DMRS port corresponding to SRS resource indicator field and/or Precoding information and number of layers field | 0 | 1st scheduled DMRS port corresponding to Second SRS resource indicator field and/or Second Precoding information field |

(continued)

| Value of MSB | DMRS port | Value of LSB | DMRS port |
|---|---|---|---|
| 1 | 2nd scheduled DMRS port corresponding to SRS resource indicator field and/or Precoding information and number of layers field | 1 | 2nd scheduled DMRS port corresponding to Second SRS resource indicator field and/or Second Precoding information field |

For the case of more than 2 PTRS port are configured for all the PUSCH transmission groups or up to 2 PTRS ports is supported for at least one PUSCH transmission group, the association of PTRS port and DMRS port of only the group with 1 PTRS port should be indicated, and 2bits can be used as shown in table 3 or 1 bit is used as shown in table 4 or 5 for this group.

In the case of 3 DMRS ports are configured or indicated for one PUSCH group, if two PTRS ports are supported in this group, that one PTRS port is shared by one DMRS port and the other PTRS port is shared by the other two DMRS ports, and the association of this PTRS port and the shared two DMRS port should be indicated, such as in table 5. in the case of 4 PTRS ports are supported, and 4 DMRS ports are indicated, on indication is needed.

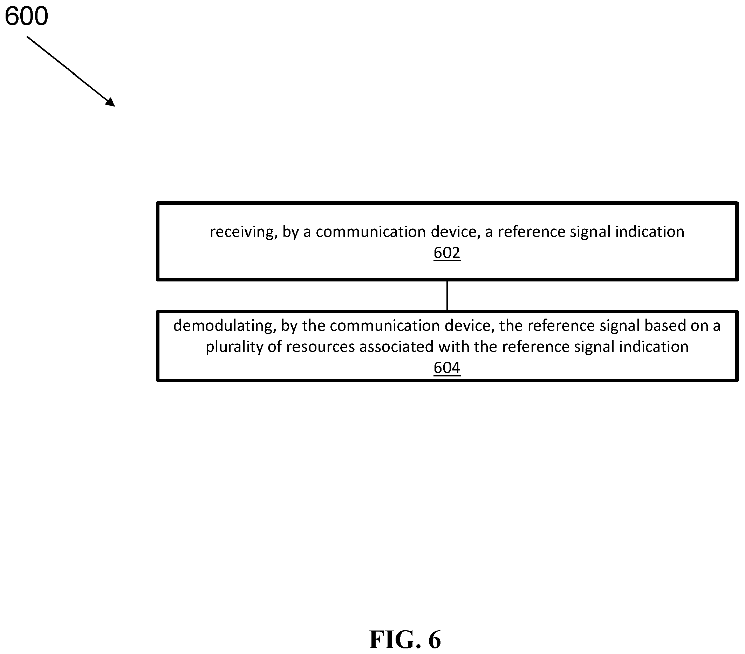

One aspect of this application describes a method of wireless communication, as disclosed in FIG. 6, including receiving, by a communication device, a reference signal indication (602); and demodulating, by the communication device, the reference signal based on a plurality of resources associated with the reference signal indication (604). Additional details and examples are discussed with respect to Embodiment 1.

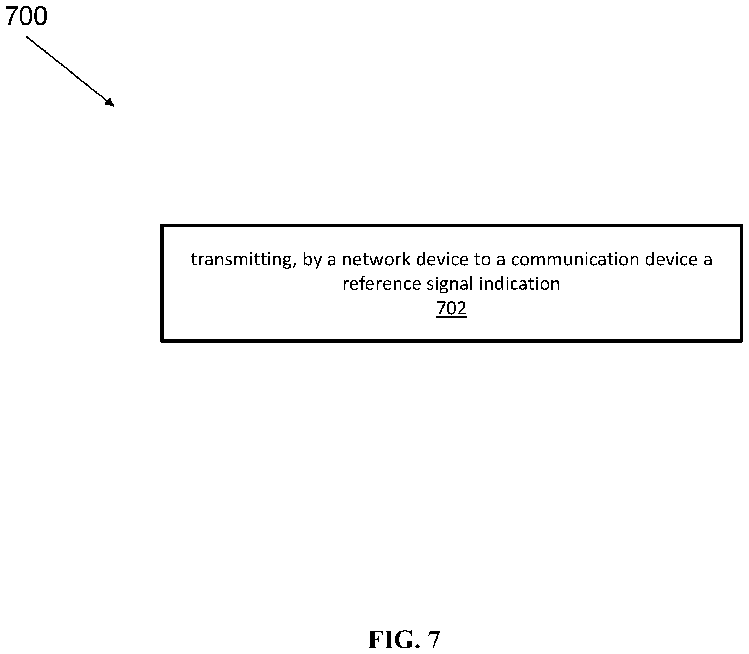

Another aspect of this application provides a method of wireless communication, as disclosed in FIG. 7, including transmitting, by a network device to a communication device a reference signal indication (702); wherein the reference signal indication indicates a plurality of resources that enable the communication device to demodulate the reference signal. Additional details and examples are discussed with respect to Embodiment 1.

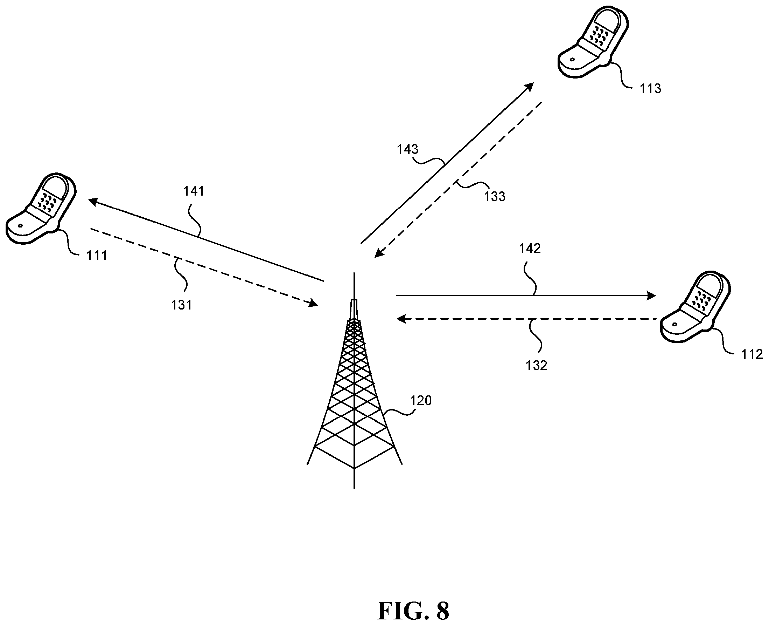

FIG. 8 shows an example of a wireless communication system (e.g., a long term evolution (LTE), 5G or NR cellular network) that includes a BS 120 and one or more user equipment (UE) 111, 112 and 113. In some embodiments, the uplink transmissions (131, 132, 133) can include uplink control information (UCI), higher layer signaling (e.g., UE assistance information or UE capability), or uplink information. In some embodiments, the downlink transmissions (141, 142, 143) can include DCI or high layer signaling or downlink information. The UE may be, for example, a smartphone, a tablet, a mobile computer, a machine to machine (M2M) device, a terminal, a mobile device, an Internet of Things (IoT) device, and so on.

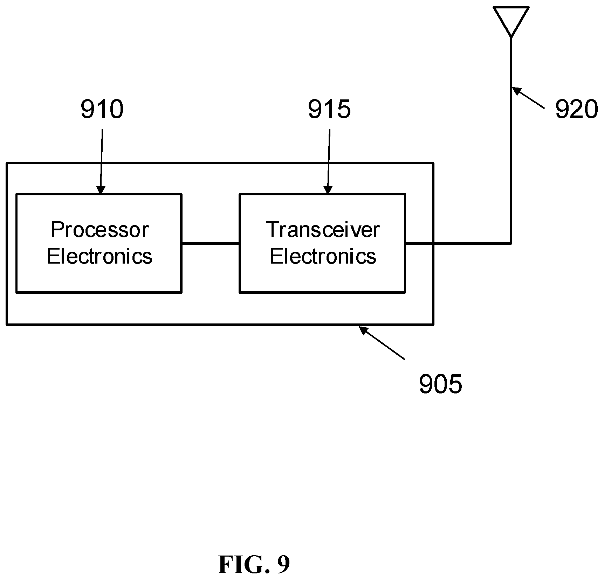

FIG. 9 is a block diagram representation of a portion of an apparatus, in accordance with some embodiments of the presently disclosed technology. An apparatus 905 such as a network device or a base station or a wireless device (or UE), can include processor electronics 910 such as a microprocessor that implements one or more of the techniques presented in this document. The apparatus 905 can include transceiver electronics 915 to send and/or receive wireless signals over one or more communication interfaces such as antenna(s) 920. The apparatus 905 can include other communication interfaces for transmitting and receiving data. Apparatus 905 can include one or more memories (not explicitly shown) configured to store information such as data and/or instructions. In some implementations, the processor electronics 910 can include at least a portion of the transceiver electronics 915. In some embodiments, at least some of the disclosed techniques, modules or functions are implemented using the apparatus 905.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

Only a few implementations and examples are described, and other implementations, enhancements, and variations can be made based on what is described and illustrated in this document.

## Claims

1. A method of wireless communication, comprising:

   receiving (602), by a communication device, a reference signal indication; and
   demodulating (604), by the communication device, a reference signal based on a plurality of resources associated with the reference signal indication,

   wherein the plurality of resources are associated with a resource element or a subcarrier in a frequency domain,
   the method being **characterised in that** the resource element or the subcarrier in the frequency domain is determined based on an equation: $k = a*n+b*k'+c+\Delta$,

   wherein $k$ is an index of the resource element or the subcarrier, $a$ and $b$ are associated with at least one of: a number of Code Division Multiplexing, CDM, groups, a number of Demodulation Reference Signal, DMRS, ports or a configured DMRS type, $k'$ and $\Delta$ are associated with a DMRS port index or a CDM group index, n is a serial integer from 0,
   wherein parameters are further determined from at least one of:

   for DMRS type 1, frequency domain orthogonal cover codes, FD-OCC, length is 4, a=8, b=2, c=0, then $\Delta = 0$ for the first CDM group and $\Delta$=1 for the second CDM group, or
   for DMRS type 2, FD-OCC length is 4, a=12, b=1, c=0 or 4, then $\Delta = 0$ for the first CDM group, $\Delta$=2 for the second CDM group, and $\Delta$=4 for the third CDM group,

   wherein $k'$ is presented as $k' = 0,1,2,3$ when FD-OCC length is 4, and
   wherein for DMRS type 2, c = 0 is associated with $k' = 0,1$ and c = 4 is associated with $k' = 2,3$.

2. The method of claim 1,

   wherein the plurality of resources are further associated with a generated sequence of the reference signal,
   wherein the generated sequence is based on $r(x * n + k')$,
   wherein x and $k'$ are associated with at least one of: the number of orthogonal DMRS ports in one CDM group, the FD-OCC length, the total number of DMRS ports for all the CDM groups in one Orthogonal Frequency Division Multiplexing, OFDM, symbol, or a DMRS port index,
   wherein the number of orthogonal DMRS ports in one CDM group or the FD-OCC length is 4, and
   wherein the generated sequence is further generated according to $r(4 * n + k')$.

3. The method of claim 1, wherein $n$ is represented as $n = 0,1,...,$ *floor (numberofRE s / a)* - 1; or $n = 0,1,...,$ *ceil (numberofRE s /a* - 1) ; and
   wherein the *numberofREs* is at least one of: a total number of resource elements or subcarriers for an uplink or downlink transmission scheduling, a total number of resource elements in a precoding resource block group, PRG, a total number of resource elements or subcarriers for an uplink or downlink transmission scheduling, or a total number of resource elements in a PRG except for the last plurality resource elements.

4. The method of claim 2, wherein the resource element or the subcarrier in the frequency domain is mapped to the intermediate quantity $a_{k,l}^{(p,\mu)}$ on following equation:

$$a_{k,l}^{(p,\mu)} = w_f(k')w_t(l')r(4*n+k')$$

$$k = \begin{cases} 8*n+2*k'+\Delta, \text{configuration type I} \\ 12*n+k'+c+\Delta, \quad \text{configuration type II} \end{cases}$$

$$k' = 0,1,2,3$$

$$c = \begin{cases} 0 \quad \text{when } k'=0,1 \\ 4 \quad \text{when } k'=2,3 \end{cases}$$

$$l = \bar{l} + l'$$

$$n = 0,1...$$

$$j = 0,1,...,v-1$$ ,

wherein $k$ is an index of resource elements or subcarrier, $b$ is associated with the number of CDM groups or the configured DMRS type, $k'$ represents DMRS mapping parameter, $n$ represents different times of DMRS mapping for the same CDM group, $\Delta$ is associated to an index of a CDM group or a DMRS port, $w_f(k')$ and $w_f(l')$ *are* Orthogonal Cover Code, OCC, parameters in frequency domain and time domain, and $r(4*n+k')$ is the resource sequence of the DMRS port.

5. A method of wireless communication, comprising:
transmitting, by a network device to a communication device a reference signal indication,

wherein the reference signal indication associates with a plurality of resources,
wherein the plurality of resources are associated with a resource element or a subcarrier in a frequency domain, the method being **characterised in that** the resource element or the subcarrier in the frequency domain is determined based on an equation: $k = a*n+b*k'+c+\Delta$,
wherein $k$ is an index of the resource element or the subcarrier, $a$ and b are associated with at least one of: a number of Code Division Multiplexing, CDM, groups, a number of Demodulation Reference Signal, DMRS, ports or a configured DMRS type, $k'$ and $\Delta$ are associated with a DMRS port index or a CDM group index, in is a serial integer from 0,
wherein parameters are further determined from at least one of: for DMRS type 1, frequency domain orthogonal cover codes, FD-OCC, length is 4, a=8, b=2, c=0, then $\Delta$ = 0 for the first CDM group and $\Delta$=1 for the second CDM group, or for DMRS type 2, FD-OCC length is 4, a=12, b=1, c=0 or 4, then $\Delta$ = 0 for the first CDM group, $\Delta$=2 for the second CDM group, and $\Delta$=4 for the third CDM group,
wherein $k'$ is presented as $k'$ = 0,1,2,3 when FD-OCC length is 4, and
wherein for DMRS type 2, c = 0 is associated with $k'$ = 0,1 and c = 4 is associated with $k'$ = 2,3.

6. The method of claim 5,

wherein the plurality of resources are further associated with a generated sequence of the reference signal,
wherein the generated sequence is based on $r(x*n+k')$,
wherein x and $k'$ are associated with at least one of: the number of orthogonal DMRS ports in one CDM group, the FD-OCC length, the total number of DMRS ports for all the CDM groups in one Orthogonal Frequency Division Multiplexing, OFDM, symbol, or a DMRS port index,
wherein the number of orthogonal DMRS ports in one CDM group or the FD-OCC length is 4, and
wherein the generated sequence is further generated according to $r(4*n+k')$.

7. The method of claim 5, wherein $n$ is represented as $n$ = 0,1,..., *floor (numberofRE s / a)* - 1; or $n$ = 0,1,..., *ceil (numberofRE s /a* - 1) ; and

wherein the *numberofREs* is at least one of: a total number of resource elements or subcarriers for an uplink or downlink transmission scheduling, a total number of resource elements in a precoding resource block group, PRG, a total number of resource elements or subcarriers for an uplink or downlink transmission scheduling, or a total number of resource elements in a precoding resource block group, PRG, except for the last plurality resource elements.

8. The method of claim 6, wherein the resource element or the subcarrier in the frequency domain is mapped to the intermediate quantity $a_{k,l}^{(p,\mu)}$ on following equation:

$$a_{k,l}^{(p,\mu)} = w_f(k')w_t(l')r(4*n+k')$$

$$k = \begin{cases} 8*n+2*k'+\Delta, config ration\ type\ I \\ 12*n+k'+c+\Delta, \quad config ration\ type\ II \end{cases}$$

$$k' = 0,1,2,3$$

$$c = \begin{cases} 0 \quad when\ k'=0,1 \\ 4 \quad when\ k'=2,3 \end{cases}$$

$$l = \bar{l} + l'$$

$$n = 0,1...$$

$$j = 0,1,...,v-1 \qquad ,$$

wherein *k* is an index of resource elements or subcarrier, *b* is associated with the number of CDM groups or the configured DMRS type, *k'* represents DMRS mapping parameter, *n* represents different times of DMRS mapping for the same CDM group, $\Delta$ is associated to an index of a CDM group or a DMRS port, $w_f(k')$ and $w_t(l')$ are Orthogonal Cover Code, OCC, parameters in frequency domain and time domain, and r(4 * *n* + *k'*) is the resource sequence of the DMRS port.

9. A communication apparatus comprising a processor configured to perform a method recited in any one or more of claims 1 to 8.

10. A computer readable medium comprising instructions which, when executed by a computer, cause the computer to carry out steps of a method recited in any one or more of claims 1 to 8.

**Patentansprüche**

1. Verfahren für eine drahtlose Kommunikation, aufweisend:

Empfangen (602), durch eine Kommunikationsvorrichtung, einer Referenzsignalanzeige; und
Demodulieren (604), durch die Kommunikationsvorrichtung, eines Referenzsignals basierend auf mehreren Ressourcen, die mit der Referenzsignalanzeige verknüpft sind,
wobei die mehreren Ressourcen einem Ressourcenelement oder einem Subträger in einem Frequenzbereich zugeordnet sind,
wobei das Verfahren **dadurch gekennzeichnet ist, dass**
das Ressourcenelement oder der Subträger im Frequenzbereich basierend auf einer Gleichung bestimmt wird:
*k=a*n+b*k'+c+$\Delta$,
wobei *k* ein Index des Ressourcenelements oder des Subträgers ist,
a und *b* mindestens einem zugeordnet sind von: einer Anzahl von Codemultiplex-Gruppen, CDM-Gruppen, einer Anzahl von Demodulationsreferenzsignal-Ports, DMRS-Ports, oder einem konfigurierten DMRS-Typ, *k'* und Δ einem DMRS-Port-Index oder einem CDM-Gruppen-Index zugeordnet sind, *n* eine fortlaufende ganze Zahl ab 0 ist,

wobei Parameter ferner bestimmt werden aus mindestens einem von:

für DMRS-Typ 1 beträgt eine Länge von Frequenzbereich-orthogonalen Abdeckungscodes, FD-OCC, 4, a=8, b=2, c=0, dann Δ = 0 für die erste CDM-Gruppe und Δ=1 für die zweite CDM-Gruppe oder für DMRS-Typ 2 beträgt die FD-OCC-Länge 4, a=12, b=1, c=0 oder 4, dann Δ = 0 für die erste CDM-Gruppe, Δ = 2 für die zweite CDM-Gruppe und Δ = 4 für die dritte CDM-Gruppe,
wobei *k'* als *k'* = 0,1,2,3 dargestellt wird, wenn die FD-OCC-Länge 4 beträgt, und
wobei für DMRS-Typ 2 c = 0 *k'* = 0,1 zugeordnet ist und c = 4 *k'* = 2,3 zugeordnet ist.

2. Verfahren nach Anspruch 1,

wobei die mehreren Ressourcen ferner einer erzeugten Sequenz des Referenzsignals zugeordnet sind, wobei die erzeugte Sequenz auf *r(x \* n + k')* basiert,
wobei x und *k'* mindestens einem zugeordnet sind von: der Anzahl von orthogonalen DMRS-Ports in einer CDM-Gruppe, der FD-OCC-Länge, der Gesamtzahl der DMRS-Ports für alle CDM-Gruppen in einem orthogonalen Frequenzmultiplex-Symbol, OFDM-Symbol, oder einem DMRS-Port-Index,
wobei die Anzahl der orthogonalen DMRS-Ports in einer CDM-Gruppe oder die FD-OCC-Länge 4 beträgt, und
wobei die erzeugte Sequenz ferner gemäß r(4 \* *n + k'*) erzeugt wird.

3. Verfahren nach Anspruch 1, wobei n dargestellt wird als *n* = 0,1,..., *floor(numberofRE s/a)* - 1; oder n = 0,1,..., *ceil (numberofRE s/a* - 1); und

wobei die *numberofREs* mindestens eine ist von: einer Gesamtanzahl von Ressourcenelementen oder Subträgern für eine Uplink- oder Downlink-Übertragungsplanung, einer Gesamtanzahl von Ressourcenelementen in einer Vorcodierungsressourcenblockgruppe, PRG, einer Gesamtanzahl von Ressourcenelementen oder Subträgern für eine Uplink- oder Downlink-Übertragungsplanung, oder einer Gesamtanzahl von Ressourcenelementen in einer PRG mit Ausnahme der letzten mehreren Ressourcenelemente.

4. Verfahren nach Anspruch 2, wobei das Ressourcenelement oder der Subträger im Frequenzbereich auf die Zwischenmenge $a_{k,l}^{(p,\mu)}$ gemäß folgender Gleichung abgebildet wird:

$$a_{k,l}^{(p,\mu)} = w_f(k')w_t(l')r(4 \* n + k')$$

$$k = \begin{cases} 8 \* n + 2 \* k' + \Delta, & \textit{Konfigurationstyp I} \\ 12 \* n + k' + c + \Delta, & \textit{Konfigurationstyp II} \end{cases}$$

$$k' = 0,1,2,3$$

$$c = \begin{cases} 0 & \textit{wenn } k' = 0,1 \\ 4 & \textit{wenn } k' = 2,3 \end{cases}$$

$$l = \bar{l} + l'$$

$$n = 0,1...$$

$$j = 0,1,..., v - 1$$

wobei k ein Index von Ressourcenelementen oder Subträger ist, b der Anzahl von CDM-Gruppen oder dem konfigurierten DMRS-Typ zugeordnet ist, *k'* einen DMRS-Abbildungsparameter darstellt, *n* verschiedene Zeiten einer DMRS-Abbildung für dieselbe CDM-Gruppe darstellt, Δ einem Index einer CDM-Gruppe oder eines DMRS-Ports zugeordnet ist, $w_f(k')$ und $w_f(l')$ orthogonale Abdeckungscode-Parameter, OCC-Parameter, im Frequenzbereich und Zeitbereich sind, und r(4 * $n$ + k') die Ressourcensequenz des DMRS-Ports ist.

5. Verfahren für eine drahtlose Kommunikation, aufweisend:

Übertragen, durch eine Netzwerkvorrichtung an eine Kommunikationsvorrichtung, einer Referenzsignalanzeige,
wobei die Referenzsignalanzeige mit mehreren Ressourcen verknüpft ist,
wobei die mehreren Ressourcen einem Ressourcenelement oder einem Subträger in einem Frequenzbereich zugeordnet sind,
wobei das Verfahren **dadurch gekennzeichnet ist, dass**
das Ressourcenelement oder der Subträger im Frequenzbereich basierend auf einer Gleichung bestimmt wird: $k=a*n+b*k'+c+\Delta$,
wobei k ein Index des Ressourcenelements oder des Subträgers ist, a und *b* mindestens einem zugeordnet sind von: einer Anzahl von Codemultiplex-Gruppen, CDM-Gruppen, einer Anzahl von Demodulationsreferenzsignal-Ports, DMRS-Ports, oder einem konfigurierten DMRS-Typ, k' und $\Delta$ einem DMRS-Port-Index oder einem CDM-Gruppen-Index zugeordnet sind, n eine fortlaufende ganze Zahl ab 0 ist,
wobei Parameter ferner bestimmt werden aus mindestens einem von: für DMRS-Typ 1 beträgt die Länge der Frequenzbereich-orthogonalen Abdeckungscodes, FD-OCC, 4, a=8, b=2, c=0, dann $\Delta$ = 0 für die erste CDM-Gruppe und $\Delta$=1 für die zweite CDM-Gruppe, oder für DMRS-Typ 2 beträgt die Länge der FD-OCC 4, a=12, b=1, c=0 oder 4, dann $\Delta$ = 0 für die erste CDM-Gruppe, $\Delta$ = 2 für die zweite CDM-Gruppe und $\Delta$ = 4 für die dritte CDM-Gruppe,
wobei k' als k' = 0,1,2,3 dargestellt wird, wenn die FD-OCC-Länge 4 beträgt, und
wobei für DMRS-Typ 2 c = 0 k' = 0,1 zugeordnet ist und c = 4 k' = 2,3 zugeordnet ist.

6. Verfahren nach Anspruch 5,

wobei die mehreren Ressourcen ferner einer erzeugten Sequenz des Referenzsignals zugeordnet sind, wobei die erzeugte Sequenz auf r(x * $n$ + k') basiert,
wobei x und k' mindestens einem zugeordnet sind von: der Anzahl der orthogonalen DMRS-Ports in einer CDM-Gruppe, der FD-OCC-Länge, der Gesamtzahl der DMRS-Ports für alle CDM-Gruppen in einem orthogonalen Frequenzmultiplex-Symbol, OFDM-Symbol, oder einem DMRS-Port-Index,
wobei die Anzahl der orthogonalen DMRS-Ports in einer CDM-Gruppe oder die FD-OCC-Länge 4 beträgt, und
wobei die erzeugte Sequenz ferner gemäß r(4 * $n$ + k') erzeugt wird.

7. Verfahren nach Anspruch 5, wobei n dargestellt wird als $n$ = 0,1,..., *floor(numberofRE s/a)* - 1; oder n = 0,1,..., *ceil*(*Anzahl der Res/a* - 1); und
wobei die *numberofREs* mindestens eine ist von: einer Gesamtanzahl von Ressourcenelementen oder Subträgern für eine Uplink- oder Downlink-Übertragungsplanung, einer Gesamtanzahl von Ressourcenelementen in einer Vorcodierungsressourcenblockgruppe, PRG, einer Gesamtanzahl von Ressourcenelementen oder Subträgern für eine Uplink- oder Downlink-Übertragungsplanung, oder einer Gesamtanzahl von Ressourcenelementen in einer Vorcodierungsressourcenblockgruppe, PRG, mit Ausnahme der letzten mehreren Ressourcenelemente.

8. Verfahren nach Anspruch 6, wobei das Ressourcenelement oder der Subträger im Frequenzbereich auf die Zwischenmenge $a_{k,l}^{(p,\mu)}$ gemäß folgender Gleichung abgebildet wird:

$$a_{k,l}^{(p,\mu)} = w_f(k')w_t(l')r(4*n+k')$$

$$k = \begin{cases} 8*n+2*k'+\Delta, Konfigurationstyp\ I \\ 12*n+k'+c+\Delta, \quad Konfigurationstyp\ II \end{cases}$$

$$k' = 0,1,2,3$$

$$c = \begin{cases} 0 & wenn \ k' = 0,1 \\ 4 & wenn \ k' = 2,3 \end{cases}$$

$$l = \bar{l} + l'$$

$$n = 0,1\ldots$$

$$j = 0,1,\ldots,v-1$$

wobei k ein Index von Ressourcenelementen oder Subträger ist, b der Anzahl von CDM-Gruppen oder dem konfigurierten DMRS-Typ zugeordnet ist, k' einen DMRS-Abbildungsparameter darstellt, $n$ verschiedene Zeiten der DMRS-Abbildung für dieselbe CDM-Gruppe darstellt, $\Delta$ einem Index einer CDM-Gruppe oder eines DMRS-Ports zugeordnet ist, $w_f(k)$ und $w_f(l')$ orthogonale Abdeckungscode-Parameter, OCC-Parameter, im Frequenzbereich und Zeitbereich sind, und $r(4 * n + k')$ die Ressourcensequenz des DMRS-Ports ist.

9. Kommunikationseinrichtung, aufweisend einen Prozessor, der konfiguriert ist, um ein Verfahren, das in einem oder mehreren der Ansprüche 1 bis 8 angegeben ist, durchzuführen.

10. Computerlesbares Medium, aufweisend Anweisungen, die, wenn sie durch einen Computer ausgeführt werden, den Computer veranlassen, Schritte eines Verfahrens, die in einem oder mehreren der Ansprüche 1 bis 8 angegeben sind, vorzunehmen.

**Revendications**

1. Procédé de communication sans fil, comprenant :

   la réception (602), par un dispositif de communication, d'une indication de signal de référence ; et
   la démodulation (604), par le dispositif de communication, d'un signal de référence sur la base d'une pluralité de ressources associées à l'indication de signal de référence,
   dans lequel la pluralité de ressources sont associées à un élément de ressource ou à une sous-porteuse dans un domaine fréquentiel,
   le procédé étant **caractérisé en ce que**
   l'élément de ressource ou la sous-porteuse dans le domaine fréquentiel est déterminé sur la base d'une équation : $k = a * n + b * k' + c + \Delta$,
   dans lequel $k$ est un indice de l'élément de ressource ou de la sous-porteuse,
   a et b sont associés à au moins l'un parmi : un nombre de groupes de multiplexage par division de code, CDM, un nombre de ports de signal de référence de démodulation, DMRS, ou un type de DMRS configuré, $k'$ et $\Delta$ sont associés à un indice de port DMRS ou à un indice de groupe CDM, $n$ est un nombre entier en série à partir de 0, dans lequel des paramètres sont en outre déterminés à partir d'au moins l'un parmi :

   pour un DMRS de type 1, une longueur de codes de couverture orthogonaux dans le domaine fréquentiel, FD-OCC, est
   4, a = 8, b = 2, c = 0, puis $\Delta$ = 0 pour le premier groupe CDM et $\Delta$ = 1 pour le deuxième groupe CDM, ou
   pour un DMRS de type 2, une longueur FD-OCC vaut 4, a = 12, b = 1, c = 0 ou 4, puis $\Delta$ = 0 pour le premier groupe CDM, $\Delta$ = 2 pour le deuxième groupe CDM, et $\Delta$ = 4 pour le troisième groupe CDM,
   dans lequel $k'$ est présenté comme $k'$ = 0,1,2,3 lorsque la longueur FD-OCC vaut 4, et
   dans lequel, pour un DMRS de type 2, c = 0 est associé à $k'$ = 0,1 et c = 4 est associé à $k'$ = 2,3.

2. Procédé selon la revendication 1,

   dans lequel la pluralité de ressources sont en outre associées à une séquence générée du signal de référence,
   dans lequel la séquence générée est basée sur $r(x * n + k')$,
   dans lequel x et k' sont associés à au moins l'un parmi : le nombre de ports DMRS orthogonaux dans un groupe CDM, la longueur FD-OCC, le nombre total de ports DMRS pour tous les groupes CDM dans un symbole de multiplexage par répartition orthogonale de la fréquence, OFDM, ou un indice de port DMRS,
dans lequel le nombre de ports DMRS orthogonaux dans un groupe CDM ou la longueur FD-OCC vaut 4, et
dans lequel la séquence générée est en outre générée selon r(4 * n + k').

**3.** Procédé selon la revendication 1, dans lequel n est représenté par $n = 0,1,...,$ *floor(numberofRE s/a)* - 1 ; ou $n = 0,1,...,$ *ceil*(*numberofRE s/a* - 1) ; et
dans lequel le *numberofREs* est au moins l'un parmi : un nombre total d'éléments de ressource ou de sous-porteuses pour une planification de transmission de liaison montante ou de liaison descendante, un nombre total d'éléments de ressource dans un groupe de blocs de ressources de précodage, PRG, un nombre total d'éléments de ressource ou de sous-porteuses pour une planification de transmission de liaison montante ou de liaison descendante, ou un nombre total d'éléments de ressource dans un PRG à l'exception de la dernière pluralité d'éléments de ressource.

**4.** Procédé selon la revendication 2, dans lequel l'élément de ressource ou la sous-porteuse dans le domaine fréquentiel est mappé sur la quantité intermédiaire $a_{k,l}^{(p,\mu)}$ sur l'équation suivante :

$$a_{k,l}^{(p,\mu)} = w_f(k')w_t(l')r(4 * n + k')$$

$$k = \begin{cases} 8 * n + 2 * k' + \Delta, & type\ de\ configuration\ I \\ 12 * n + k' + c + \Delta, & type\ de\ configuration\ II \end{cases}$$

$$k' = 0,1,2,3$$

$$c = \begin{cases} 0 & quand\ k' = 0,1 \\ 4 & quand\ k' = 2,3 \end{cases}$$

$$l = \bar{l} + l'$$

$$n = 0,1...$$

$$j = 0,1,...,v - 1$$

dans lequel k est un indice d'éléments de ressource ou de sous-porteuse, b est associé au nombre de groupes CDM ou au type DMRS configuré, k' représente un paramètre de mappage DMRS, *n* représente différents moments de mappage DMRS pour le même groupe CDM, Δ est associé à un indice d'un groupe CDM ou d'un port DMRS, $w_f(k')$ et $w_t(l')$ sont des codes de couverture orthogonaux, OCC, des paramètres dans le domaine fréquentiel et le domaine temporel, et *r*(4 * n + k') est la séquence de ressources du port DMRS.

**5.** Procédé de communication sans fil, comprenant :

la transmission, par un dispositif de réseau à un dispositif de communication, d'une indication de signal de référence,
dans lequel l'indication de signal de référence associe à une pluralité de ressources,
dans lequel la pluralité de ressources sont associées à un élément de ressource ou à une sous-porteuse dans un domaine fréquentiel,
le procédé étant **caractérisé en ce que**
l'élément de ressource ou la sous-porteuse dans le domaine fréquentiel est déterminé sur la base d'une équation : $k = a * n + b * k' + c + \Delta$,
dans lequel *k* est un indice de l'élément de ressource ou de la sous-porteuse, a et b sont associés à au moins l'un parmi : un nombre de groupes de multiplexage par division de code, CDM, un nombre de ports de signal de référence de démodulation, DMRS, ou un type de DMRS configuré, *k*' et Δ sont associés à un indice de port DMRS ou à un indice de groupe CDM, *n* est un entier en série à partir de 0,
dans lequel des paramètres sont en outre déterminés à partir d'au moins l'un parmi : pour un DMRS de type 1, des codes de couverture orthogonaux dans le domaine fréquentiel, FD-OCC, une longueur vaut 4, a = 8, b = 2, c = 0, alors Δ = 0 pour le premier groupe CDM et Δ = 1 pour le deuxième groupe CDM, ou pour un DMRS de type 2, une longueur FD-OCC vaut 4, a = 12, b = 1, c = 0 ou 4, puis Δ = 0 pour le premier groupe CDM, Δ = 2 pour le deuxième groupe CDM et Δ = 4 pour le troisième groupe CDM,

dans lequel $k'$ est présenté comme $k'$ = 0,1,2,3 lorsque la longueur FD-OCC vaut 4, et

dans lequel, pour un DMRS de type 2, c = 0 est associé à $k'$ = 0,1 et c = 4 est associé à $k'$ = 2,3.

6. Procédé selon la revendication 5,

dans lequel la pluralité de ressources sont en outre associées à une séquence générée du signal de référence, dans lequel la séquence générée est basée sur $r(x * n + k')$,

dans lequel x et $k'$ sont associés à au moins l'un parmi : le nombre de ports DMRS orthogonaux dans un groupe CDM, la longueur FD-OCC, le nombre total de ports DMRS pour tous les groupes CDM dans un symbole de multiplexage par répartition orthogonale de la fréquence, OFDM, ou un indice de port DMRS,

dans lequel le nombre de ports DMRS orthogonaux dans un groupe CDM ou la longueur FD-OCC vaut 4, et

dans lequel la séquence générée est en outre générée selon $r(4 * n + k')$.

7. Procédé selon la revendication 5, dans lequel $n$ est représenté par $n$ = 0,1,..., *floor(numberofREs/a)* - 1 ; ou $n$ = 0,1,..., *ceil(numberofREs/a* - 1) ; et

dans lequel le *numberofREs* est au moins l'un parmi : un nombre total d'éléments de ressource ou de sous-porteuses pour une planification de transmission de liaison montante ou de liaison descendante, un nombre total d'éléments de ressource dans un groupe de blocs de ressources, PRG, un nombre total d'éléments de ressource ou de sous-porteuses pour une planification de transmission de liaison montante ou de liaison descendante, ou un nombre total d'éléments de ressource dans un groupe de blocs de ressources de précodage, PRG, à l'exception de la dernière pluralité d'éléments de ressource.

8. Procédé selon la revendication 6, dans lequel l'élément de ressource ou la sous-porteuse dans le domaine fréquentiel est mappé à la quantité intermédiaire $a_{k,l}^{(p,\mu)}$ sur l'équation suivante :

$$a_{k,l}^{(p,\mu)} = w_f(k')w_t(l')r(4 * n + k')$$

$$k = \begin{cases} 8 * n + 2 * k' + \Delta, type\ de\ configuration\ I \\ 12 * n + k' + c + \Delta, \quad type\ de\ configuration\ II \end{cases}$$

$$k' = 0,1,2,3$$

$$c = \begin{cases} 0 & quand\ k' = 0,1 \\ 4 & quand\ k' = 2,3 \end{cases}$$

$$l = \bar{l} + l'$$

$$n = 0,1...$$

$$j = 0,1,...,v-1$$

dans lequel $k$ est un indice d'éléments de ressource ou de sous-porteuse, b est associé au nombre de groupes CDM ou au type DMRS configuré, $k'$ représente un paramètre de mappage DMRS, $n$ représente différents moments de mappage DMRS pour le même groupe CDM, Δ est associé à un indice d'un groupe CDM ou d'un port DMRS, $w_f(k')$ et $w_t(l')$ sont des paramètres de codes de couverture orthogonaux, OCC, dans le domaine fréquentiel et le domaine temporel, et $r(4 * n + k')$ est la séquence de ressources du port DMRS.

9. Appareil de communication comprenant un processeur configuré pour réaliser un procédé selon l'une quelconque ou plusieurs des revendications 1 à 8.

10. Support lisible par ordinateur comprenant des instructions qui, lorsqu'elles sont exécutées par un ordinateur, amènent l'ordinateur à mettre en œuvre des étapes d'un procédé selon l'une quelconque ou plusieurs des revendications 1 à 8.

Existing DMRS type 2, one front loaded DMRS symbol,
4 DMRS RE per port per symbol

CDM group#2 in which port 4 and 5 are mapped

CDM group#1 in which port 2 and 3 are mapped

CDM group#0 in which port 0 and 1 are mapped

Symbol #n

**FIG. 1**

Existing DMRS type 2, two front loaded DMRS symbols, 4 DMRS RE per port per symbol

CDM group#2 in which port 4, 5, 10, 11 are mapped

CDM group#1 in which port 2, 3, 8, 9 are mapped

CDM group#0 in which port 0, 1, 6, 7 are mapped

**FIG. 2**

Symbol  #0   #1   #2   #3   #4   #5   #6   #7   #8   #9   #10   #11   #12   #13

**FIG. 3**

EP 4 371 253 B1

Existing DMRS type 2, one front loaded DMRS symbol,
4 DMRS RE per port per symbol

CDM group#2 with 4 ports in CDM manner

CDM group#1 with 4 ports in CDM manner

CDM group#0 with 4 ports in CDM manner

Symbol #n

**FIG. 4**

**FIG. 5**

600

receiving, by a communication device, a reference signal indication
602

demodulating, by the communication device, the reference signal based on a
plurality of resources associated with the reference signal indication
604

**FIG. 6**

EP 4 371 253 B1

700

transmitting, by a network device to a communication device a
reference signal indication
702

FIG. 7

EP 4 371 253 B1

FIG. 8

FIG. 9

**EP 4 371 253 B1**

**Patent documents cited in the description**

- US 11038729 B2

- US 11310019 B2